# EUROPEAN PATENT APPLICATION

(11) **EP 4 682 294 A1**
(43) Date of publication of application: **21.01.2026**
(21) Application number: 24887370.5
(22) Date of filing: 31.05.2024
(51) Int. Cl.: C23F 1/44

(54) **POROUS METAL STRUCTURE AND PREPARATION METHOD THEREFOR**

(30) Priority: 07.11.2023 CN 202311469631; 29.12.2023 CN 202311849942
(71) Applicant: Contemporary Amperex Technology Co., Limited, Ningde, Fujian 352100 (CN)
(72) Inventor: LI, Zun, Ningde, Fujian 352100 (CN); WANG, Manman, Ningde, Fujian 352100 (CN); GE, Xiaoming, Ningde, Fujian 352100 (CN); OUYANG, Chuying, Ningde, Fujian 352100 (CN)
(74) Representative: Ziebig Hengelhaupt Intellectual Property Attorneys Patentanwaltskanzlei PartGmbB
(86) International application number: PCT/CN2024/096790
(87) International publication number: WO 2025/097746

(57) **Abstract**

The present application discloses a porous metal structure and a method for preparing the same. The method includes the following steps: providing a cold-rolled alloy foil material; carrying out recrystallization annealing treatment on the alloy foil material, and then carrying out first cooling treatment to obtain an alloy foil material having a first component phase; carrying out phase separation thermal treatment on the alloy foil material, and then carrying out second cooling treatment to separate out a second component phase and obtain an alloy foil material having both the first component phase and the second component phase, where the temperature of the phase separation thermal treatment is smaller than the temperature of the recrystallization annealing treatment, and an average cooling rate of the second cooling treatment is smaller than an average cooling rate of the first cooling treatment; and carrying out dealloying treatment on the alloy foil material, carrying out reduction annealing treatment in a reducing gas atmosphere, and carrying out third cooling treatment to obtain a porous metal structure. According to the present application, grain boundary corrosion cracks formed in dealloying treatment can be partially or even completely repaired, and the prepared porous metal structure can have good strength and toughness.

## Description

### CROSS-REFERENCE TO RELATED APPLICATIONS

The present application claims priority to Chinese Patent Application No. 202311469631.3, filed on November 07, 2023 and entitled "POROUS METAL STRUCTURE AND METHOD FOR PREPARING SAME", and claims priority to Chinese Patent Application 202311849942.2, filed on December 29, 2023 and entitled "POROUS METAL STRUCTURE AND METHOD FOR PREPARING SAME", which are incorporated herein by reference in their entireties.

### TECHNICAL FIELD

The present application relates to a porous metal structure and a method for preparing the same.

### BACKGROUND

In recent years, batteries have been widely applied to energy storage power systems of hydropower, thermal power, wind power, and solar power stations, and various fields such as consumer electronics, electric power tools, electric bicycles, electric motorcycles, electric vehicles, military equipment, and aerospace. A negative electrode is an important component of a battery, and may affect the properties of the battery. The negative electrode of the battery at present is generally formed by disposing a negative electrode film layer including negative electrode active materials such as graphite on a copper foil. However, with continuous expansion of the application field of the battery, people have an increasing demand on the battery having a high energy density. A metal battery and a battery without a negative electrode may have a high energy density because no negative electrode film layer is used. However, an uneven deposit problem and a dendritic crystal problem of the metal restrict the development of the metal battery and the battery without a negative electrode. A negative electrode current collector, as an important composition of the metal battery and the battery without a negative electrode, is expected to relieve the uneven deposit problem and the dendritic crystal problem of the metal through the improvement.

A porous metal structure has the advantages of light weight, large specific surface area, etc. When applied to the battery, the porous metal structure can improve the energy density of the battery, and can further improve the reliability of the battery. Particularly, when the negative electrode of the metal battery and the battery without a negative electrode uses the porous metal structure, the uneven deposit problem and the dendritic crystal problem of the metal can further be reduced.

Alloy forging and cold rolling processes are effective methods for mass production of an alloy foil material, and carrying out dealloying treatment on the cold-rolled alloy foil material is an effective method for obtaining the porous metal structure. Restricted by the current alloy foil material production process and the current dealloying treatment process, there are usually many grain boundary corrosion cracks inside the prepared porous metal structure in the prior art. Therefore, the properties of the porous metal structure may be influenced, and the practical application of the porous metal structure to the battery may be influenced.

The foregoing statement is merely intended to provide background information related to the present application, and does not necessarily constitute the prior art.

### SUMMARY

The present application provides a porous metal structure and a method for preparing the same. Grain boundary corrosion cracks formed in dealloying treatment can be partially or even completely repaired, and the prepared porous metal structure may have good strength and toughness.

**In a** first aspect, the present application provides a method for preparing a porous metal structure, including the following steps: providing a cold-rolled alloy foil material; carrying out recrystallization annealing treatment on the alloy foil material, and then carrying out first cooling treatment to obtain an alloy foil material having a first component phase; carrying out phase separation thermal treatment on the alloy foil material having the first component phase, and then carrying out second cooling treatment to separate out a second component phase and obtain an alloy foil material having both the first component phase and the second component phase, where the temperature of the phase separation thermal treatment is smaller than the temperature of the recrystallization annealing treatment, and an average cooling rate of the second cooling treatment is smaller than an average cooling rate of the first cooling treatment; and carrying out dealloying treatment on the alloy foil material having the first component phase and the second component phase, carrying out reduction annealing treatment in a reducing gas atmosphere, and carrying out third cooling treatment to obtain a porous metal structure.

By the method provided by examples of the present application, grain boundary corrosion cracks formed in dealloying treatment can be partially or even completely repaired, and the prepared porous metal structure can have good strength and toughness.

In some examples, the average cooling rate of the first cooling treatment is greater than or equal to 100°C/min, and is optionally greater than or equal to 200°C/min. Therefore, the problem of element segregation in a grain boundary position is favorably relieved, and the diffusion of metal atoms near a grain boundary in the subsequent reduction annealing treatment is facilitated, so that the grain boundary corrosion cracks can be better repaired, and the prepared porous metal structure can have good toughness.

In some examples, the average cooling rate of the second cooling treatment is smaller than or equal to 2°C/min. Therefore, the interphase stress between the first component phase and the second component phase in alloy after phase separation is favorably reduced, and the diffusion of metal atoms near a grain boundary in the subsequent reduction annealing treatment is facilitated, so that the grain boundary corrosion cracks can be better repaired, and the prepared porous metal structure can have good toughness.

In some examples, the first cooling treatment process is a water cooling process. Therefore, the problem of element segregation in a grain boundary position is favorably relieved, and the diffusion of metal atoms near a grain boundary in the subsequent reduction annealing treatment is facilitated, so that the grain boundary corrosion cracks can be better repaired, and the prepared porous metal structure can have good toughness.

In some examples, the second cooling treatment process is a furnace cooling process. Therefore, the interphase stress between the first component phase and the second component phase in alloy after phase separation is favorably reduced, and the diffusion of metal atoms near a grain boundary in the subsequent reduction annealing treatment is facilitated, so that the grain boundary corrosion cracks can be better repaired, and the prepared porous metal structure can have good toughness.

In some examples, the temperature reaches 50°C or below in the first cooling treatment. Therefore, the surface oxidization risk of the alloy foil material can be reduced.

In some examples, the temperature reaches 50°C or below in the second cooling treatment. Therefore, the surface oxidization risk of the alloy foil material can be reduced.

In some examples, the recrystallization annealing treatment is carried out in a muffle furnace.

In some examples, the phase separation thermal treatment is carried out in a tube furnace, and optionally, a temperature rise rate of the tube furnace is 2°C/min to 10°C/min, and is optionally 5°C/min to 10°C/min.

In some examples, a reducing gas in the reduction annealing treatment includes a mixed gas of ammonia gas or hydrogen gas with an inert gas.

In some examples, a flow rate of the reducing gas in the reduction annealing treatment is 100 SCCM to 2000 SCCM.

In some examples, the reduction annealing treatment is carried out in a tube furnace, and optionally, a temperature rise rate of the tube furnace is 2°C/min to 10°C/min, and is optionally 5°C/min to 10°C/min.

In some examples, an average cooling rate of the third cooling treatment is smaller than or equal to 2°C/min, and optionally, the third cooling treatment process is a furnace cooling process. A slow cooling process is adopted, so that the stress of the porous metal structure can be reduced, so that the porous metal structure cannot easily curl.

In some examples, the temperature reaches 50°C or below in the third cooling treatment. Therefore, the surface oxidization risk of the alloy foil material can be reduced.

In some examples, the alloy foil material is a copper alloy foil material, the copper alloy foil material includes a Cu element and a non-Cu metallic element, a standard electrode potential of the non-Cu metallic element is smaller than a standard electrode potential of the Cu element, and optionally, the non-Cu metallic element includes one or more of Mn, Zn, Ni, Al, and Fe.

In some examples, an atomic content of the non-Cu metallic element in the copper alloy foil material is 60at.% or more, and is optionally 65at.% to 80at.%.

In some examples, the first component phase includes a y phase.

In some examples, the second component phase includes an α phase.

In some examples, a temperature of the recrystallization annealing treatment is 720°C to 850°C.

In some examples, a heat insulation time at the temperature of the recrystallization annealing treatment is 10 min to 60 min.

By adjusting the temperature of the recrystallization annealing treatment and/or in the above ranges, the alloy foil material having the first component phase and having good plastic processing capability is favorably obtained, and the separation of the second component phase in the phase separation thermal treatment is also facilitated.

In some examples, a temperature of the phase separation thermal treatment is 620°C to 700°C.

In some examples, a heat insulation time at the temperature of the phase separation thermal treatment is 60 min to 360 min.

By adjusting the temperature of the phase separation thermal treatment and/or in the above ranges, the separation of the second component phase in the phase separation thermal treatment is facilitated, and the acquisition of the micron level porous metal structure in the subsequent reduction annealing treatment is also facilitated.

In some examples, a temperature of the reduction annealing treatment is 700°C to 900°C, and is optionally 720°C to 900°C.

In some examples, a heat insulation time at the temperature of the reduction annealing treatment is 30 min to 120 min.

By adjusting the temperature and/or the time of the reduction annealing treatment in the above ranges, heated diffusion motion of metal atoms is facilitated, so that the grain boundary corrosion cracks formed in the dealloying treatment can be better repaired, the prepared porous metal structure can realize self supporting to avoid the occurrence of a structure collapse problem, and the prepared porous metal structure can have good toughness.

In some examples, a process of carrying out the dealloying treatment on the alloy foil material having the first component phase and the second component phase includes a free corrosion dealloying process and an electrochemical corrosion dealloying process.

In a second aspect, the present application provides a porous metal structure prepared by the method according to the first aspect of the present application.

Optionally, the porous metal structure is a porous copper structure.

### BRIEF DESCRIPTION OF THE DRAWINGS

FIG. 1 shows a cross section SEM image of a porous copper intermediate obtained through dealloying treatment in Example 1;
FIG. 2 shows a cross section SEM image of a porous copper intermediate obtained through dealloying treatment in Example 1, with the porous copper intermediate being subjected to plasma cutting and polishing treatment;
FIG. 3 shows a cross section SEM image of a porous copper structure prepared in Example 1;
FIG. 4 shows a cross section SEM image of a porous copper structure prepared in Example 2;
FIG. 5 shows a cross section SEM image of a porous copper structure prepared in Example 6;
FIG. 6 shows a cross section SEM image of a porous copper structure prepared in Example 7;
FIG. 7 shows a cross-section SEM image of a porous copper intermediate obtained through dealloying treatment in Comparative Example 1;
FIG. 8 shows a cross section SEM image of a porous copper intermediate obtained through dealloying treatment in Comparative Example 1, with the porous copper intermediate being subjected to plasma cutting and polishing treatment;
FIG. 9 shows a cross section SEM image of a porous copper structure prepared in Comparative Example 1;
FIG. 10 shows a cross section SEM image of a porous copper structure prepared in Comparative Example 2; and
FIG. 11 shows a cross section SEM image of a porous copper structure prepared in Comparative Example 5.

### DETAILED DESCRIPTION

The embodiments of a porous metal structure and a method for preparing the same of the present application are specifically illustrated and disclosed in detail with reference to the accompanying drawings properly hereafter. However, there may be situations where unnecessary detailed illustrations are omitted. For example, there are situations where detailed illustrations of well-known matters and repeated illustrations of actually the same structure are omitted. Thus, the following illustrations do not become unnecessarily lengthy, which facilitates understanding by those skilled in the art. In addition, the accompanying drawings and following illustrations are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. The range defined in this way may include or exclude end values, and may be arbitrarily combined, that is, any one lower limit may be combined with any one upper limit to form a range. For example, if ranges of 60 to 120 and 80 to 110 are listed for a particular parameter, it is to be understood that ranges of 60 to 110 and 80 to 120 are also expected. In addition, if minimum range values 1 and 2 are listed, and if maximum range values 3, 4 and 5 are listed, all of the following ranges may be expected: 1 to 3, 1 to 4, 1 to 5, 2 to 3, 2 to 4, and 2 to 5. In the present application, unless otherwise specified, the numerical range "a to b" represents the abbreviated representation of any combination of real numbers between a to b, and both a and b are real numbers. For example, the numerical range "0 to 5" represents that all real numbers between 0 and 5 are listed herein, and "0 to 5" is merely the abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other to form new technical solutions, and such technical solutions should be considered to be included in the disclosure of this application.

Unless otherwise specified, all the technical features and optional technical features of the present application can be combined with each other to form new technical solutions, and such technical solutions should be considered to be included in the disclosure of this application.

Unless otherwise specified, all the steps in the present application can be performed in the order or in a random order, and preferably in the order. For example, that the method includes steps (a) and (b) means that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

In the present application, the term "a plurality of" or "a plurality of types of" indicates two or more.

In the descriptions of examples of the present application, unless otherwise explicitly specified, the first feature being located "above" or "below" the second feature may be the first feature being in a direct contact with the second feature, or the first feature being in an indirect contact with the second feature through an intermediary. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

Unless otherwise specified, the terms used in the present application have well-known meanings as commonly understood by those skilled in the art.

Unless otherwise specified, the values of the parameters mentioned in the present application may be measured by various test methods commonly used in the art, and for example, may be measured according to the test methods given in examples of the present application. Unless otherwise specified, a test temperature of each parameter is 25°C.

Examples of the present application provide a method for preparing a porous metal structure.

The method includes the following steps: A cold-rolled alloy foil material is provided. Recrystallization annealing treatment is carried out on the alloy foil material, and then, first cooling treatment is carried out to obtain an alloy foil material having a first component phase. Phase separation thermal treatment is carried out on the alloy foil material having the first component phase, and then, second cooling treatment is carried out to separate out a second component phase and obtain an alloy foil material having both the first component phase and the second component phase. The temperature of the phase separation thermal treatment is smaller than the temperature of the recrystallization annealing treatment, and an average cooling rate of the second cooling treatment is smaller than an average cooling rate of the first cooling treatment. Dealloying treatment is carried out on the alloy foil material having the first component phase and the second component phase, reduction annealing treatment is carried out in a reducing gas atmosphere, and third cooling treatment is carried out to obtain a porous metal structure.

Alloy is generally formed by relatively active metal and relatively inactive metal. The dealloying treatment is a process of selectively dissolving the relatively active metal in the alloy to form holes.

A thickness of the alloy foil material for preparing a battery-level porous metal structure is generally very small, and for example, is generally at the micron level (for example, is generally dozens of micrometers to hundreds of micrometers). Therefore, a preparation process for the alloy foil material generally needs multi-pass cold rolling. However, after repeated cold-rolling and thinning on the alloy, problems of rolling orientation, element segregation, stress accumulation, etc. easily occur, so the structural strength of the alloy foil material may be reduced. Through the recrystallization annealing treatment on the cold-rolled alloy foil material, the alloy with good plastic processing capability can be obtained. However, when the alloy foil material is subjected to dealloying treatment to prepare a high-porosity porous metal structure, the volume contraction of the alloy foil material is serious, so the prepared porous metal structure cannot realize self supporting, grain boundary corrosion cracks are very easy to form, and the practical application of the porous metal structure is further influenced.

A method for preparing a porous metal structure provided by examples of the present application includes 4 stages: (1) An alloy foil material having a first component phase is prepared. (2) An alloy foil material having both a first component phase and a second component phase is prepared. (3) Dealloying treatment is carried out. (4) Reduction annealing treatment is carried out.

Through the recrystallization annealing treatment on the cold-rolled alloy foil material, an alloy foil material having the first component phase and having good plastic processing capability can be obtained, and grains in the alloy foil material are mainly isometric crystals.

By using the phase separation thermal treatment at a reduced temperature, an alloy foil material having both the first component phase and the second component phase can be obtained, so that the porous metal structure subjected to the dealloying treatment can realize self supporting.

After the dealloying treatment, the porous metal structure easily generates grain boundary corrosion cracks. It is because a particular atomic diffusion phenomenon exists in a cooling process after the recrystallization annealing treatment, relatively active metal atoms in the alloy are easily enriched at the crystal boundary, and relatively inactive metal atoms are easily enriched at two sides of the crystal boundary. The dealloying treatment is a process of removing at least parts of relatively active metal components from the alloy foil material in a manner of free corrosion or electrochemical corrosion, etc. to prepare the porous metal structure. During the dealloying treatment, the relatively active metal components are preferentially corroded, and non-corroded components have poor diffusion capability, so that grain boundary corrosion cracks may be easily generated. Additionally, the diffusion power of the metal atoms on the surface of the alloy is relatively strong, so relatively uniform pore structures can be formed on the surface layer through diffusion. The inside of the alloy has low surface energy, and the diffusion power of the metal atoms is weak, so after the grain boundary corrosion through dealloying treatment, the metal atoms in the grain boundary position inside the alloy are prone to remain in the original position, at this moment, the cracks remaining after dealloying treatment cannot be filled, the prepared porous metal structure has a great number of grain boundary corrosion cracks, at the same time, the toughness of the prepared porous metal structure is very poor, and greater cracks may easily occur after bending.

Through the reduction annealing treatment, metal oxides on a surface layer of the porous foil material obtained after dealloying treatment can be reduced into a metal element with better diffusion capability, metal atoms (mainly relatively inactive metal atoms, relatively active metal atoms which are not corroded completely may also be included) near the gain boundaries may be heated to diffuse to repair the grain boundary corrosion cracks formed in the dealloying treatment, and the prepared porous metal structure can have good toughness.

The first cooling process after the recrystallization annealing treatment adopts a higher cooling rate. It is because the recrystallization annealing treatment is high-temperature thermal treatment, a particular atomic diffusion phenomenon exists in a cooling process after the high-temperature thermal treatment, relatively active metal atoms in the alloy are easily enriched at the crystal boundary, and relatively inactive metal atoms are easily enriched at two sides of the crystal boundary. Therefore, the effects of the subsequent dealloying treatment and the reduction annealing treatment may be influenced. After the recrystallization annealing treatment, the fast cooling process is adopted, so that the temperature inside the alloy foil material can be fast lowered to a low value, and the cooling time is shortened. Therefore, the problem of more serious element segregation in a grain boundary position is possibly avoided, and the diffusion of metal atoms near a grain boundary in the subsequent reduction annealing treatment is facilitated, so that the grain boundary corrosion cracks can be better repaired, and the prepared porous metal structure can have good toughness.

The second cooling process after the phase separation thermal treatment adopts a lower cooling rate. It is because the alloy after the phase separation has interphase stress between the first component phase and the second component phase, and the interphase stress can be reduced by adopting the slow cooling process. Therefore, the diffusion of metal atoms near a grain boundary in the subsequent reduction annealing treatment is facilitated, so that the grain boundary corrosion cracks can be better repaired, and the prepared porous metal structure can have good toughness.

Therefore, by the method provided by examples of the present application, grain boundary corrosion cracks formed in dealloying treatment can be partially or even completely repaired, and the prepared porous metal structure can have good strength and toughness.

**In** some examples, the cold-rolled alloy foil material may be commercially available, and may be acquired according to a preparation process known in the art. For example, it may be acquired through working procedures of smelting, cutting, annealing, cold rolling, etc.

**In** some examples, an average cooling rate of the first cooling treatment may be greater than or equal to 100°C/min, and is optionally greater than or equal to 200°C/min. Therefore, the problem of element segregation in a grain boundary position is favorably relieved, and the diffusion of metal atoms near a grain boundary in the subsequent reduction annealing treatment is facilitated, so that the grain boundary corrosion cracks can be better repaired, and the prepared porous metal structure can have good toughness.

**In** some examples, the first cooling treatment process may be a water cooling process. Therefore, the problem of element segregation in a grain boundary position is favorably relieved, and the diffusion of metal atoms near a grain boundary in the subsequent reduction annealing treatment is facilitated, so that the grain boundary corrosion cracks can be better repaired, and the prepared porous metal structure can have good toughness. The water cooling process refers to a process of taking out the alloy foil material from a high-temperature state, and then immersing the alloy foil material into water to be fast cooled. Optionally, the temperature of the used water may be 20°C to 30°C.

**In** some examples, the alloy foil material may be cooled to a temperature of 50°C or below in the first cooling treatment. Therefore, the surface oxidization risk of the alloy foil material in a furnace discharging transfer process can be reduced.

**In** some examples, an average cooling rate of the second cooling treatment may be smaller than or equal to 2°C/min. Therefore, the interphase stress between the first component phase and the second component phase in alloy after phase separation is favorably reduced, and the diffusion of metal atoms near a grain boundary in the subsequent reduction annealing treatment is facilitated, so that the grain boundary corrosion cracks can be better repaired, and the prepared porous metal structure can have good toughness.

**In** some examples, the second cooling treatment process may be a furnace cooling process. Therefore, the interphase stress between the first component phase and the second component phase in alloy after phase separation is favorably reduced, and the diffusion of metal atoms near a grain boundary in the subsequent reduction annealing treatment is facilitated, so that the grain boundary corrosion cracks can be better repaired, and the prepared porous metal structure can have good toughness. The furnace cooling process is a process of slowly and naturally cooling the alloy foil material together with a furnace body from the high-temperature state instead of taking out the alloy foil material from the furnace body in the high-temperature state.

**In** some examples, the alloy foil material may be cooled to a temperature 50°C or below in the second cooling treatment. Therefore, the surface oxidization risk of the alloy foil material in a furnace discharging transfer process can be reduced.

**In** some examples, the recrystallization annealing treatment may be carried out in a muffle furnace.

**In** some examples, before recrystallization treatment, some antioxidative materials may be coated on the surface of the alloy foil material to reduce the surface oxidization problem. For example, the antioxidative materials may be obtained by adding superfine inorganic metal oxides into a high-purity silicate solution and performing elaborate processing.

**In** some examples, the phase separation thermal treatment may use a programmed heating process. The programmed heating process includes a temperature rise section, a heat insulation section, and a cooling section.

**In** some examples, the phase separation thermal treatment may be carried out under the protection of an inert gas. Optionally, the inert gas may include one or more of nitrogen gas, argon gas, and helium gas.

**In** some examples, the phase separation thermal treatment may be carried out in a tube furnace. Optionally, a temperature rise rate of the tube furnace may be 2°C/min to 10°C/min, and may be optionally 5°C/min to 10°C/min.

Through the reduction annealing treatment, the metal oxides on the surface layer of the porous foil material obtained through dealloying treatment can be reduced into metal elements with better diffusion capability. In some examples, a reducing gas in the reduction annealing treatment may include a mixed gas of ammonia gas or hydrogen gas with an inert gas. The inert gas may include one or more of nitrogen gas, argon gas, and helium gas.

Optionally, the reducing gas in the reduction annealing treatment includes a mixed gas of hydrogen gas with an inert gas, and the volume percent of the hydrogen gas in the reducing gas may be greater than or equal to 2%, and is more preferably 2% to 10%. Therefore, the metal oxides on the surface layer of the porous foil material obtained through dealloying treatment can be reduced into metal elements with better diffusion capability, and the operation safety can be ensured.

Optionally, a flow rate of the reducing gas in the reduction annealing treatment may be 100 SCCM to 2000 SCCM.

The reduction annealing treatment may use a programmed heating process. The programmed heating process includes a temperature rise section, a heat insulation section, and a cooling section.

**In** some examples, the reduction annealing treatment may be carried out in a tube furnace. Optionally, a temperature rise rate of the tube furnace may be 2°C/min to 10°C/min, and may be optionally 5°C/min to 10°C/min.

**In** some examples, an average cooling rate of the third cooling treatment may be smaller than or equal to 2°C/min. A slow cooling process is adopted, so that the stress of the porous metal structure can be reduced, so that the porous metal structure cannot easily curl.

**In** some examples, the third cooling treatment process may be a furnace cooling process. The furnace cooling process is a process of slowly and naturally cooling the porous metal structure together with a furnace body in the high-temperature state instead of taking out the porous metal structure from the furnace body in the high-temperature state.

**In** some examples, the porous metal structure may be cooled to a temperature below 50°C in the third cooling treatment. Therefore, the surface oxidization risk of the porous metal structure in a furnace discharging transfer process may be reduced.

**In** the present application, the average cooling rate=(temperature before cooling-temperature after cooling)/total cooling time.

**In** some examples, a process of carrying out the dealloying treatment on the alloy foil material having the first component phase and the second component phase may include a free corrosion dealloying process and an electrochemical corrosion dealloying process.

Both the free corrosion dealloying process and the electrochemical corrosion dealloying process may use known technologies in the art. A washing process after the dealloying may include water washing and alcohol washing. Through water washing, the metal ion content in the porous metal structure may be reduced, and through alcohol washing, the moisture content in the porous metal structure may be reduced.

Deionized water may be used in water washing. The number of times of water washing may be 1 to 6, and it is not limited in examples of the present application.

Absolute ethyl alcohol may be used in alcohol washing. The number of times of alcohol washing may be 1 to 6, and it is not limited in examples of the present application.

A drying process after the washing process may be carried in a vacuum drying chamber, and a drying temperature may be 25°C to 50°C, so that the metal oxidization may be reduced.

Corrosion liquid used in the free corrosion dealloying process may include an acidic aqueous solution, such as hydrochloric acid, sulfuric acid, phosphoric acid, and acetic acid.

Corrosion liquid used in the electrochemical corrosion dealloying process may include an acidic (such as hydrochloric acid, sulfuric acid, phosphoric acid, and acetic acid) aqueous solution, a neutral salt (such as sodium chloride) aqueous solution, or a mixed aqueous solution of the above components, etc.

In some examples, the alloy foil material may be a copper alloy foil material, the copper alloy foil material may include a Cu element and a non-Cu metallic element, and a standard electrode potential of the non-Cu metallic element is smaller than a standard electrode potential of the Cu element. That is, the activity of the non-Cu metallic element is greater than that of the Cu element. Optionally, the non-Cu metallic element may include one or more of Mn, Zn, Ni, Al, and Fe.

The contents of the Cu element and the non-Cu metallic element are not specifically limited. In some examples, an atomic content of the non-Cu metallic element in the copper alloy foil material is greater than 60at.%, and is optionally 65at.% to 85at.%, or 65at.% to 80at.%. Therefore, the prepared porous copper structure may realize self supporting, and the porous copper structure may also be favorably applied to a negative electrode of a battery.

In some examples, the copper alloy foil material may further include a small number of non-metallic element impurities, such as C or Si.

In some examples, the first component phase may include a y phase. By taking a Mn-Cu alloy foil material as an example, the first component phase may include a γ-phase Mn-Cu alloy.

In some examples, the second component phase may include an α phase. By taking a Mn-Cu alloy foil material as an example, the second component phase may include α-phase Mn.

In some examples, a temperature of the recrystallization annealing treatment may be 720°C to 850°C, for example, may be 720°C, 730°C, 740°C, 750°C, 760°C, 770°C, 780°C, 790°C, 800°C, 810°C, 820°C, 830°C, 840°C, or 850°C, or in a range formed by any of the foregoing values, and is optionally 760°C to 820°C.

In some examples, the heat insulation time at the temperature of the recrystallization annealing treatment may be 10 min to 60 min, for example, may be 10 min, 15 min, 20 min, 25 min, 30 min, 35 min, 40 min, 45 min, 50 min, 55 min, or 60 min, or in a range formed by any of the foregoing values, and is optionally 15 min to 45 min.

By adjusting the temperature of the recrystallization annealing treatment and/or in the above ranges, the alloy foil material having the first component phase and having good plastic processing capability is favorably obtained, and the separation of the second component phase in the phase separation thermal treatment is also facilitated.

In some examples, a temperature of the phase separation thermal treatment may be 620°C to 700°C, for example, may be 620°C, 630°C, 640°C, 650°C, 660°C, 670°C, 680°C, 690°C, or 700°C, or in a range formed by any of the foregoing values, and is optionally 640°C to 680°C.

In some examples, the heat insulation time at the temperature of the phase separation thermal treatment may be 60 min to 360 min, and for example, may be 60 min, 90 min, 120 min, 150 min, 180 min, 210 min, 240 min, 270 min, 300 min, 330 min, or 360 min, or in a range formed by any of the foregoing values.

By adjusting the temperature of the phase separation thermal treatment and/or in the above ranges, the separation of the second component phase in the phase separation thermal treatment is facilitated, and the acquisition of the micron level porous metal structure in the subsequent reduction annealing treatment is also facilitated.

In some examples, a temperature of the reduction annealing treatment may be 700°C to 900°C, for example, may be 720°C, 730°C, 740°C, 750°C, 760°C, 770°C, 780°C, 790°C, 800°C, 810°C, 820°C, 830°C, 840°C, 850°C, 860°C, 870°C, 880°C, 890°C, or 900°C, or in a range formed by any of the foregoing values, and is optionally 720°C to 900°C, 750°C to 880°C, or 750°C to 850°C.

In some examples, the heat insulation time at the temperature of the reduction annealing treatment may be 30 min to 120 min, for example, may be 30 min, 35 min, 40 min, 50 min, 60 min, 70 min, 80 min, 90 min, 100 min, 110 min, or 120 min, or in a range formed by any of the foregoing values, and is optionally 35 min to 100 min, 35 min to 80 min, or 35 min to 70 min.

By adjusting the temperature and/or the time of the reduction annealing treatment in the above ranges, heated diffusion motion of metal atoms is facilitated, so that the grain boundary corrosion cracks formed in the dealloying treatment can be better repaired, the prepared porous metal structure can realize self supporting to avoid the occurrence of a structure collapse problem, and the prepared porous metal structure can have good toughness.

Examples of the present application further provide a porous metal structure prepared by the above method. The porous metal structure has few grain boundary corrosion cracks, and has good strength and toughness. Optionally, the porous metal structure has no grain boundary corrosion crack.

In some examples, the porous metal structure is a porous copper structure.

In some examples, the holes of the porous metal structure are generally at a micron level.

### Examples

Contents disclosed in the present application are described in detail in the following examples. These examples are only for illustrative purposes because various modifications and changes made without departing from the scope of the content disclosed in the present application are apparent to those skilled in the art. Unless otherwise stated, all parts, percentages, and ratios of the following examples are based on weight, all reagents used in the examples are commercially available or synthesized according to conventional methods and may be directly used without further treatment, and all instruments used in the examples are commercially available.

### Example 1

### (1) Preparation of an α/γ dual-phase Mn-Cu alloy precursor

Pure copper (purity≥99.9%) and pure manganese (purity≥99.9%) raw materials were provided. Vacuum induction melting was performed to prepare Mn-Cu alloy. The Mn atom content in the Mn-Cu alloy was 75at.%, and the Cu atom content was 25at.%. After the Mn-Cu alloy prepared through vacuum induction melting was cut, working procedures of homogenizing annealing treatment, multi-pass cold rolling, etc. were carried out, and a Mn-Cu alloy foil material with the thickness about 250 µm was obtained.

The Mn-Cu alloy foil material was put into a muffle furnace to be subjected to recrystallization annealing treatment at 800°C, the heat insulation time was 20 min, and y single-phase Mn-Cu alloy was obtained. The y single-phase Mn-Cu alloy foil material was taken out, and was immediately subjected to water cooling to a temperature below 50°C (i.e., the first cooling treatment process), and then, the y single-phase Mn-Cu alloy foil material was washed by absolute ethyl alcohol and dried, and was placed into a tube furnace for phase separation thermal treatment. Before heating, a furnace tube of the tube furnace was subjected to exhausting treatment through nitrogen gas to eliminate oxygen gas from the furnace tube. After the exhausting treatment was completed, the temperature of the tube furnace was raised to 660°C at 5°C/min under the protection of a nitrogen gas atmosphere for phase separation thermal treatment, the heat insulation time was 60 min, after the process was completed, furnace cooling was performed to a temperature below 50°C (i.e., the second cooling treatment process), and an α/γ dual-phase Mn-Cu alloy precursor was obtained.

### (2) Preparation of porous copper intermediate through dealloying treatment

The prepared α/γ dual-phase Mn-Cu alloy precursor was cut into a 30 mm*30 mm sample, the sample was placed into an excessive 1 mol/L hydrochloric acid aqueous solution, and free corrosion was performed at 70°C for dealloying treatment. When no bubble apparently escaped from the hydrochloric acid aqueous solution, the sample was taken out and was immersed in 200 mL of deionized water for 30 min to remove residual hydrochloric acid, manganese-containing impurities, etc. inside the sample, then, the sample was immersed in 100 mL of absolute ethyl alcohol for 30 min to remove the moisture content remaining inside the sample, and finally, vacuum drying was performed for 2 h after 25°C to obtain the porous copper intermediate having the grain boundary corrosion cracks.

### (3) Preparation of porous copper structure through reduction annealing treatment

The prepared porous copper intermediate was placed into a corundum boat, and then, the porous copper intermediate and the corundum boat were placed into a tube furnace together for reduction annealing treatment. Before heating, a furnace tube of the tube furnace was subjected to exhausting treatment through 5% nitrogen and argon mixed gas (the volume ratio of the hydrogen gas was 5%) to eliminate oxygen gas from the furnace tube. After the exhausting treatment was completed, reducing gas of 5% nitrogen and argon mixed gas (the volume ratio of the hydrogen gas was 5%) was inflated into the tube furnace at a gas flow rate of 500 SCCM, the temperature of the tube furnace was raised to 800°C at 5°C/min for reduction annealing treatment, the heat insulation time was 40 min, after the process was completed, furnace cooling was performed to a temperature below 50°C (i.e., the third cooling treatment process), and a porous copper structure was obtained.

### Example 2

A process for preparing the porous copper structure was the same as that in Example 1, except that when the α/γ dual-phase Mn-Cu alloy precursor was prepared, the heat insulation time of the phase separation thermal treatment was 210 min.

### Example 3

A process for preparing the porous copper structure was the same as that in Example 1, except that when the α/γ dual-phase Mn-Cu alloy precursor was prepared, the heat insulation time of the phase separation thermal treatment was 360 min.

### Example 4

A process for preparing the porous copper structure was the same as that in Example 3, except that when the α/γ dual-phase Mn-Cu alloy precursor was prepared, the temperature of the phase separation thermal treatment was 620°C.

### Example 5

A process for preparing the porous copper structure was the same as that in Example 3, except that when the α/γ dual-phase Mn-Cu alloy precursor was prepared, the heat insulation temperature of the phase separation thermal treatment was 700°C.

### Example 6

A process for preparing the porous copper structure was the same as that in Example 2, except that the temperature of the reduction annealing treatment was 700°C.

### Example 7

A process for preparing the porous copper structure was the same as that in Example 2, except that the temperature of the reduction annealing treatment was 900°C.

### Example 8

A process for preparing the porous copper structure was the same as that in Example 2, except that the time of the reduction annealing treatment was 80 min.

### Example 9

A process for preparing the porous copper structure was the same as that in Example 2, except that the time of the reduction annealing treatment was 120°C.

### Example 10

A process for preparing the porous copper structure was the same as that in Example 2, except that when the α/γ dual-phase Mn-Cu alloy precursor was prepared, the temperature of the recrystallization annealing treatment was 720°C, and the heat insulation time was 60 min.

### Example 11

A process for preparing the porous copper structure was the same as that in Example 2, except that when the α/γ dual-phase Mn-Cu alloy precursor was prepared, the temperature of the recrystallization annealing treatment was 850°C, and the heat insulation time was 10 min.

### Comparative Example 1

A process for preparing the porous copper structure was the same as that in Example 1, except that processes for preparing the α/γ dual-phase Mn-Cu alloy precursor were different.

### (1) Preparation of an α/γ dual-phase Mn-Cu alloy precursor

Pure copper (purity≥99.9%) and pure manganese (purity≥99.9%) raw materials were provided. Vacuum induction melting was performed to prepare Mn-Cu alloy. The Mn atom content in the Mn-Cu alloy was 75at.%, and the Cu atom content was 25at.%. After the Mn-Cu alloy prepared through vacuum induction melting was cut, working procedures of homogenizing annealing treatment, multi-pass cold rolling, etc. were carried out, and a Mn-Cu alloy foil material with the thickness about 250 µm was obtained.

The Mn-Cu alloy foil material was put into a muffle furnace to be subjected to recrystallization annealing treatment at 800°C, the heat insulation time was 20 min, after the process was completed, furnace cooling was performed to a temperature below 50°C (i.e., the first cooling treatment process), and a γ single-phase Mn-Cu alloy foil material was obtained. The γ single-phase Mn-Cu alloy foil material was taken out, and was put into a tube furnace for phase separation thermal treatment. Before heating, a furnace tube of the tube furnace was subjected to exhausting treatment through nitrogen gas to eliminate oxygen gas from the furnace tube. After the exhausting treatment was completed, the temperature of the tube furnace was raised to 660°C at 5°C/min under the protection of a nitrogen gas atmosphere for phase separation thermal treatment, the heat insulation time was 210 min, after the process was completed, furnace cooling was performed to a temperature below 50°C (i.e., the second cooling treatment process), and an α/γ dual-phase Mn-Cu alloy precursor was obtained.

### Comparative Example 2

A process for preparing the porous copper structure was the same as that in example 1, except that processes for preparing the α/γ dual-phase Mn-Cu alloy precursor were different.

### (1) Preparation of an α/γ dual-phase Mn-Cu alloy precursor

Pure copper (purity≥99.9%) and pure manganese (purity≥99.9%) raw materials were provided. Vacuum induction melting was performed to prepare Mn-Cu alloy. The Mn atom content in the Mn-Cu alloy was 75at.%, and the Cu atom content was 25at.%. After the Mn-Cu alloy prepared through vacuum induction melting was cut, working procedures of homogenizing annealing treatment, multi-pass cold rolling, etc. were carried out, and a Mn-Cu alloy foil material with the thickness about 250 µm was obtained.

The Mn-Cu alloy foil material was put into a muffle furnace to be subjected to recrystallization annealing treatment at 800°C, the heat insulation time was 20 min, and y single-phase Mn-Cu alloy was obtained. The y single-phase Mn-Cu alloy foil material was taken out, and was immediately subjected to water cooling to a temperature below 50°C (i.e., the first cooling treatment process), and then, the y single-phase Mn-Cu alloy foil material was washed by absolute ethyl alcohol and dried, and was placed into a tube furnace for phase separation thermal treatment. Before heating, a furnace tube of the tube furnace was subjected to exhausting treatment through nitrogen gas to eliminate oxygen gas from the furnace tube. After the exhausting treatment was completed, the temperature of the tube furnace was raised to 660°C at 5°C/min under the protection of a nitrogen gas atmosphere for phase separation thermal treatment, the heat insulation time was 210 min, after the process was completed, the alloy foil material was taken out and was immediately subjected to water cooling to a temperature below 50°C (i.e., the second cooling treatment process), then, the alloy foil material was washed through absolute ethyl alcohol and dried, and an α/γ dual-phase Mn-Cu alloy precursor was obtained.

### Comparative Example 3

A process for preparing the porous copper structure was the same as that in Example 1, except that the reduction annealing treatment was not carried out (i.e., step 3 was not carried out).

### Comparative Example 4

A process for preparing the porous copper structure was the same as that in Comparative Example 2, except that the reduction annealing treatment was not carried out (i.e., step 3 was not carried out).

### Comparative Example 5

Pure copper (purity≥99.9%) and pure manganese (purity≥99.9%) raw materials were provided. Vacuum induction melting was performed to prepare Mn-Cu alloy. The Mn atom content in the Mn-Cu alloy was 75at.%, and the Cu atom content was 25at.%. After the Mn-Cu alloy prepared through vacuum induction melting was cut, working procedures of homogenizing annealing treatment, multi-pass cold rolling, etc. were carried out, and a Mn-Cu alloy foil material with the thickness about 250 µm was obtained.

The Mn-Cu alloy foil material was put into a muffle furnace to be subjected to recrystallization annealing treatment at 800°C, the heat insulation time was 20 min, after the process was completed, the alloy foil material was taken out and are immediately subjected to water cooling to a temperature below 50°C (i.e., the first cooling treatment process), and then, the alloy foil material was washed with absolute ethyl alcohol and was dried to obtain a γ single-phase Mn-Cu alloy foil material.

The prepared y single-phase Mn-Cu alloy precursor was cut into a 30 mm*30 mm sample, the sample was placed into an excessive 1 mol/L hydrochloric acid aqueous solution, and free corrosion was performed at 70°C for dealloying treatment. When no bubble apparently escaped from the hydrochloric acid aqueous solution, the sample was taken out and was immersed in 200 mL of deionized water for 30 min to remove residual hydrochloric acid, manganese-containing impurities, etc. inside the sample, then, the sample was immersed in 100 mL of absolute ethyl alcohol for 30 min to remove the moisture content remaining inside the sample, and finally, vacuum drying was performed for 2 h after 25°C to obtain a fragile porous copper structure.

### Comparative Example 6

Pure copper (purity≥99.9%) and pure manganese (purity≥99.9%) raw materials were provided. Vacuum induction melting was performed to prepare Mn-Cu alloy. The Mn atom content in the Mn-Cu alloy was 75at.%, and the Cu atom content was 25at.%. After the Mn-Cu alloy prepared through vacuum induction melting was cut, working procedures of homogenizing annealing treatment, multi-pass cold rolling, etc. were carried out, and a Mn-Cu alloy foil material with the thickness about 250 µm was obtained.

The Mn-Cu alloy foil material was put into a muffle furnace to be subjected to recrystallization annealing treatment at 800°C, the heat insulation time was 20 min, after the process was completed, furnace cooling was performed to a temperature below 50°C (i.e., the first cooling treatment process), and a y single-phase Mn-Cu alloy foil material was obtained.

The prepared γ single-phase Mn-Cu alloy precursor was cut into a 30 mm*30 mm sample, the sample was placed into an excessive 1 mol/L hydrochloric acid aqueous solution, and free corrosion was performed at 70°C for dealloying treatment. When no bubble apparently escaped from the hydrochloric acid aqueous solution, the sample was taken out and was immersed in 200 mL of deionized water for 30 min to remove residual hydrochloric acid, manganese-containing impurities, etc. inside the sample, then, the sample was immersed in 100 mL of absolute ethyl alcohol for 30 min to remove the moisture content remaining inside the sample, and finally, vacuum drying was performed for 2 h after 25°C to obtain a fragile porous copper structure.

A scanning electron microscope was used for scanning the cross section SEM images of the porous copper intermediate obtained through dealloying treatment and the porous copper structure obtained through reduction annealing treatment, and the repair degree of the grain boundary corrosion cracks was judged by counting the number of gains with the grain boundary corrosion cracks. A test instrument was a Phenom desktop scanning electron microscope Phenom XL G2, and the magnification factor was 5000 times. For the test accuracy, the SEM images may be obtained from a middle region of the porous copper intermediate and the porous copper structure in the thickness direction. The size of the selected region was about 105 µm×65 µm.

The prepared porous copper structure was slowly bent along a center line, the bending speed was smaller than or equal to 0.02 rad/s, when a dihedral angle formed by the two surfaces after bending was 120°, whether a crack was generated in the center line or not was judged, and the bending performance of the porous copper structure was thus judged. If no crack or a crack with a width smaller than 0.1 mm was generated in the center line position after bending, it was considered that the porous copper structure had very good toughness. If a crack with a width between 0.1 mm and 0.3 mm was generated in the center line position after bending, it was considered that the porous copper structure had good toughness. If a crack with a width greater than 0.3 mm was generated in the center line position after bending, it was considered that the porous copper structure had poor toughness.

A test result is shown in Table 1. In Table 1, a symbol "-" indicates that no corresponding treatment was performed, or a corresponding test could not be performed.

**Table 1**

| Serial number | Recrystallization annealing treatment | First cooling treatment | Phase separation thermal treatment | Second cooling treatment | Reduction annealing treatment | Third cooling treatment | Whether the structure realizes self supporting or not | Quantity of grains having grain boundary corrosion cracks under view field of 5000X of scanning electron microscope | | Toughness |
|---|---|---|---|---|---|---|---|---|---|---|
| | | | | | | | | After dealloying treatment | After reduction annealing treatment | |
| Example 1 | 800°C/ 20 min | Water cooling | 660°C/ 60 min | Furnace cooling | 800°C/ 40 min | Furnace cooling | Yes | 27-30 | 2-4 | Very good |
| Example 2 | 800°C/ 20 min | Water cooling | 660°C/ 210 min | Furnace cooling | 800°C/ 40 min | Furnace cooling | Yes | 26-29 | 1-3 | Very good |
| Example 3 | 800°C/ 20 min | Water cooling | 660°C/ 360 min | Furnace cooling | 800°C/ 40 min | Furnace cooling | Yes | 23-27 | 1-3 | Very good |
| Example 4 | 800°C/ 20 min | Water cooling | 620°C/ 360 min | Furnace cooling | 800°C/ 40 min | Furnace cooling | Yes | 25-28 | 1-3 | Very good |
| Example 5 | 800°C/ 20 min | Water cooling | 700°C/ 360 min | Furnace cooling | 800°C/ 40 min | Furnace cooling | Yes | 26-29 | 2-3 | Very good |
| Example 6 | 800°C/ 20 min | Water cooling | 660°C/ 210 min | Furnace cooling | 700°C/ 40 min | Furnace cooling | Yes | 26-29 | 8-10 | Good |
| Example 7 | 800°C/ 20 min | Water cooling | 660°C/ 210 min | Furnace cooling | 900°C/ 40 min | Furnace cooling | Yes | 26-29 | 1-4 | Very good |
| Example 8 | 800°C/ 20 min | Water cooling | 660°C/ 210 min | Furnace cooling | 800°C/ 80 min | Furnace cooling | Yes | 26-29 | 2-3 | Very good |
| Example 9 | 800°C/ 20 min | Water cooling | 660°C/ 210 min | Furnace cooling | 800°C/ 120 min | Furnace cooling | Yes | 26-29 | 2-4 | Very good |
| Example 10 | 720°C/ 60 min | Water cooling | 660°C/ 210 min | Furnace cooling | 800°C/ 40 min | Furnace cooling | Yes | 21-25 | 3-6 | Very good |
| Example 11 | 850°C/ 10 min | Water cooling | 660°C/ 210 min | Furnace cooling | 800°C/ 40 min | Furnace cooling | Yes | 28-32 | 2-5 | Very good |
| Comparative Example 1 | 800°C/ 20 min | Furnace cooling | 660°C/ 60 min | Furnace cooling | 800°C/ 40 min | Furnace cooling | Yes | 30-32 | >10 | Poor |
| Comparative Example 2 | 800°C/ 20 min | Water cooling | 660°C/ 60 min | Water cooling | 800°C/ 40 min | Furnace cooling | Yes | 31-35 | >10 | Poor |
| Comparative Example 3 | 800°C/ 20 min | Water cooling | 660°C/ 60 min | Furnace cooling | - | - | Yes | 27-30 | - | Poor |
| Comparative Example 4 | 800°C/ 20 min | Water cooling | 660°C/ 60 min | Water cooling | - | - | Yes | 31-35 | - | Poor |
| Comparative Example 5 | 800°C/ 20 min | Water cooling | - | - | - | - | No | - | - | - |
| Comparative Example 6 | 800°C/ 20 min | Furnace cooling | - | - | - | - | No | - | - | - |

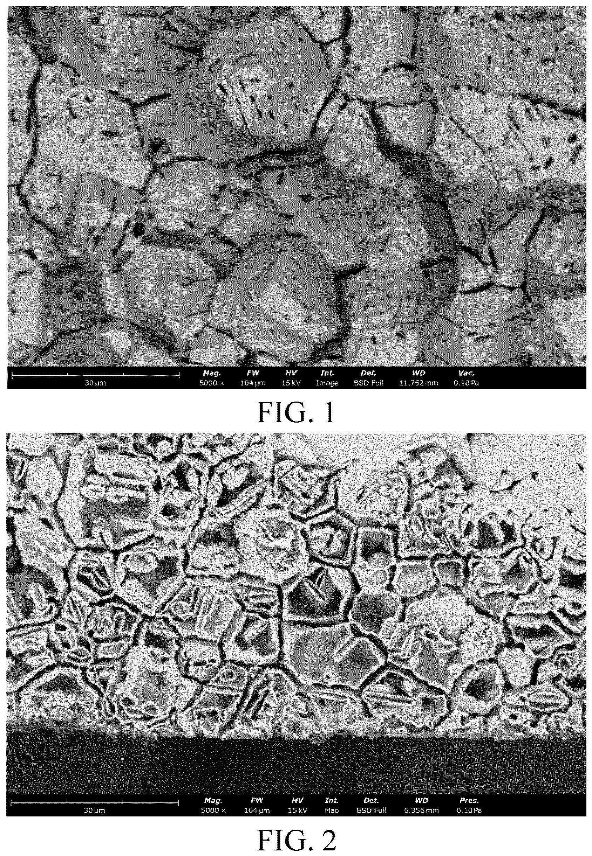

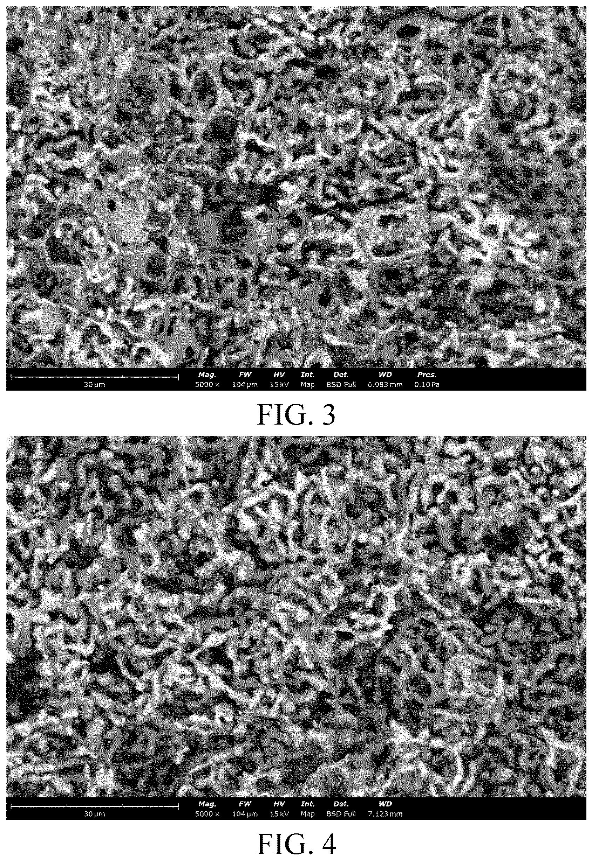

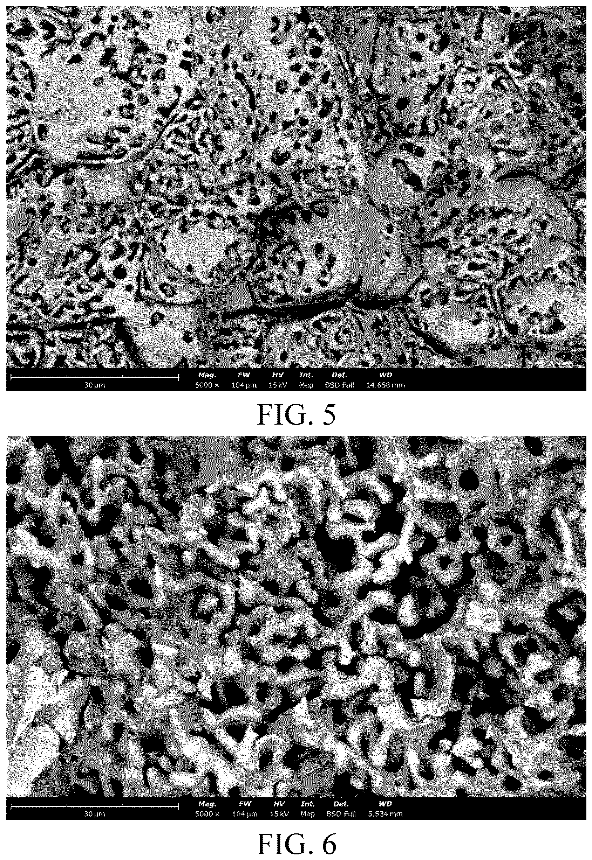

FIG. 1 shows a cross section SEM image of a porous copper intermediate obtained through dealloying treatment in Example 1; FIG. 2 shows a cross section SEM image of a porous copper intermediate obtained through dealloying treatment in Example 1, with the porous copper intermediate being subjected to plasma cutting and polishing treatment; FIG. 3 shows a cross section SEM image of a porous copper structure prepared in Example 1; FIG. 4 shows a cross section SEM image of a porous copper structure prepared in Example 2; FIG. 5 shows a cross section SEM image of a porous copper structure prepared in Example 6; and FIG. 6 shows a cross section SEM image of a porous copper structure prepared in Example 7.

It could be known from FIG. 1 to FIG. 3 that by using the method provided in examples of the present application, the grain boundary corrosion cracks of the porous copper intermediate obtained through the dealloying treatment were well repaired, and in addition, the porous metal structure prepared by the method provided in examples of the present application might realize self supporting, and therefore, good strength was achieved. In combination with the test result in Table 1, it could be known that the porous metal structure prepared by the method provided by examples of the present application further have good toughness.

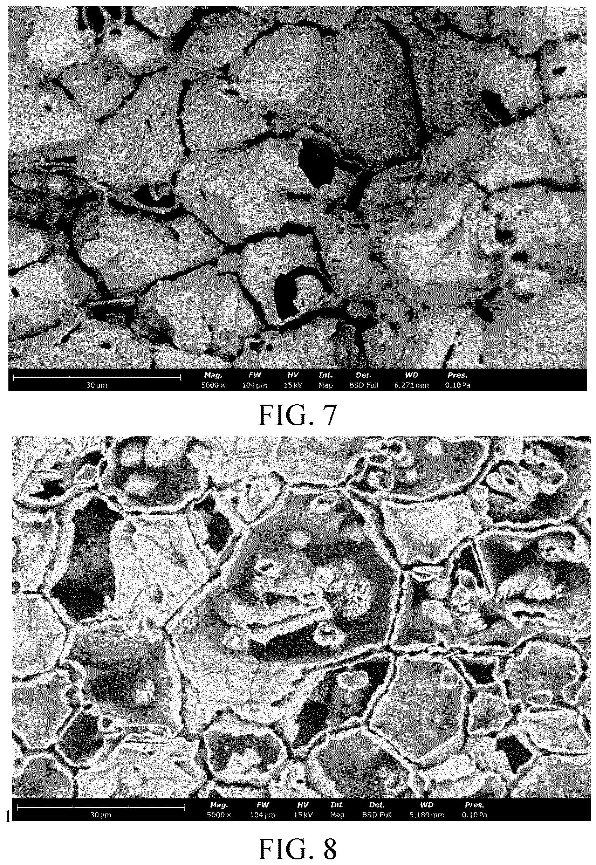

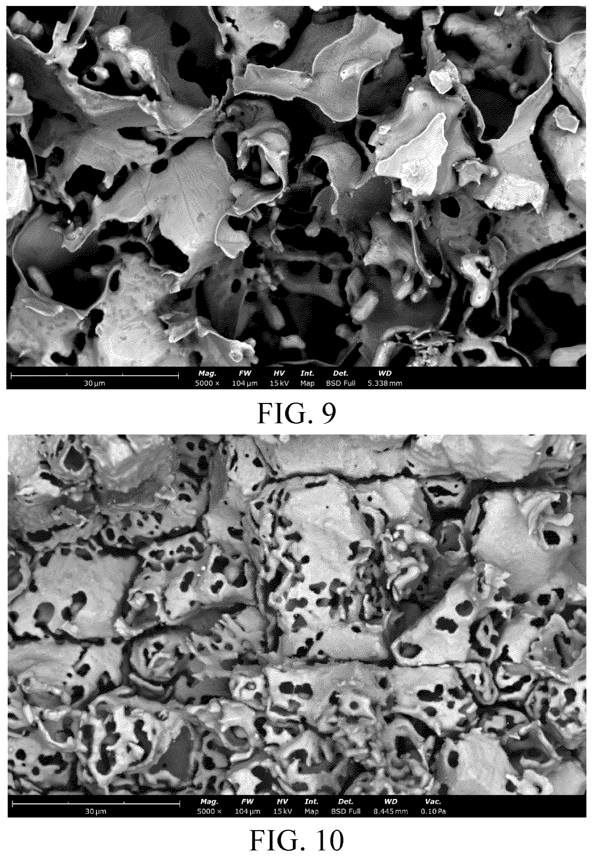

FIG. 7 shows a cross-section SEM image of a porous copper intermediate obtained through dealloying treatment in Comparative Example 1; FIG. 8 shows a cross section SEM image of a porous copper intermediate obtained through dealloying treatment in Comparative Example 1, with the porous copper intermediate being subjected to plasma cutting and polishing treatment; and FIG. 9 shows a cross section SEM image of a porous copper structure prepared in Comparative Example 1.

It could be known from FIG. 7 to FIG. 9 that the grain boundary corrosion cracks of the porous copper intermediate obtained through dealloying treatment in Comparative Example 1 were not effectively repaired. In combination with the test result in Table 1, it could be further known that the toughness of the porous copper structure prepared in Comparative Example 1 was poor, and great cracks might be generated when the structure was bent to 120°. It was because the furnace cooling process was adopted in the first cooling process after the recrystallization annealing treatment, the recrystallization annealing treatment was high-temperature thermal treatment, there was a certain atom diffusion phenomenon in the cooling process after the high-temperature thermal treatment, Mn atoms in the alloy were easily enriched at the grain boundary, Cu atoms were easily enriched at two sides of the grain boundary (i.e., a thick copper barrier was formed), and the cooling rate of the furnace cooling process was very small, so the cooling time was greatly prolonged, the serious element segregation problem might be formed in the grain boundary position, the diffusion of the metal atoms near the grain boundary during the subsequent reduction annealing treatment was hindered, the grain boundary corrosion cracks could not be effectively repaired, and at the same time, the toughness of the prepared porous metal structure might be reduced.

From FIG. 4, FIG. 5 and FIG. 6, it could be known that the time of the reduction annealing treatment was unchanged, the temperature of the reduction annealing treatment was adjusted, and the heated diffusion motion of the metal atoms was facilitated, so that the grain boundary corrosion cracks formed through dealloying treatment might be better repaired. In combination with the test result in Table 1, the toughness of the prepared porous metal structure might further be improved by adjusting the temperature of the reduction annealing treatment.

FIG. 10 shows a cross section SEM image of a porous copper structure prepared in Comparative Example 2. It could be known from FIG. 10 that when the second cooling treatment process after the phase separation thermal treatment adopted a water cooling process, the alloy after the phase separation had the interphase stress between the first component phase and the second component phase, so that the heated diffusion of the metal atoms during the subsequent reduction annealing treatment was hindered, the prepared porous metal structure had many grain boundary corrosion cracks which could not be effectively repaired, at the same time, the toughness of the prepared porous metal structure was poor, and great cracks might be generated after the structure was bent to 120°.

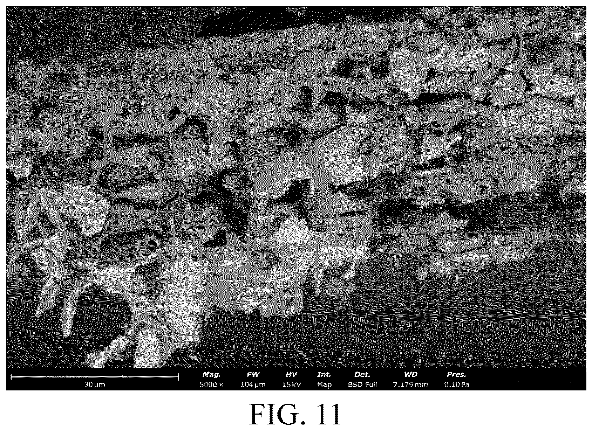

FIG. 11 shows a cross section SEM image of a porous copper structure prepared in Comparative Example 5. From FIG. 11, it could be known that if the cold-rolled alloy foil material was only subjected to recrystallization annealing treatment but was not subjected to phase separation thermal treatment, the porous metal structure obtained through dealloying treatment was fragile, and could not realize self supporting.

It should be noted that the present application is not limited to the above embodiments. The above embodiments are merely exemplary, and the embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. A method for preparing a porous metal structure, comprising the following steps:
providing a cold-rolled alloy foil material;
carrying out recrystallization annealing treatment on the alloy foil material, and then carrying out first cooling treatment to obtain an alloy foil material having a first component phase;
carrying out phase separation thermal treatment on the alloy foil material having the first component phase, and then carrying out second cooling treatment to separate out a second component phase and obtain an alloy foil material having both the first component phase and the second component phase, wherein the temperature of the phase separation thermal treatment is smaller than the temperature of the recrystallization annealing treatment, and an average cooling rate of the second cooling treatment is smaller than an average cooling rate of the first cooling treatment; and
carrying out dealloying treatment on the alloy foil material having the first component phase and the second component phase, carrying out reduction annealing treatment in a reducing gas atmosphere, and carrying out third cooling treatment to obtain a porous metal structure.

2. The method according to claim 1, wherein
the average cooling rate of the first cooling treatment is greater than or equal to 100°C/min, and is optionally greater than or equal to 200°C/min; and/or,
the average cooling rate of the second cooling treatment is smaller than or equal to 2°C/min.

3. The method according to any one of claims 1 to 2, wherein
the first cooling treatment process is a water cooling process; and/or,
the second cooling treatment process is a furnace cooling process.

4. The method according to any one of claims 1 to 3, wherein
the temperature reaches 50°C or below in the first cooling treatment; and/or,
the temperature reaches 50°C or below in the second cooling treatment.

5. The method according to any one of claims 1 to 4, wherein
the recrystallization annealing treatment is carried out in a muffle furnace; and/or,
the phase separation thermal treatment is carried out in a tube furnace, and optionally, a temperature rise rate of the tube furnace is 2°C/min to 10°C/min, and is optionally 5°C/min to 10°C/min.

6. The method according to any one of claims 1 to 5, wherein
a reducing gas in the reduction annealing treatment comprises a mixed gas of ammonia gas or hydrogen gas with an inert gas; and/or,
a flow rate of the reducing gas in the reduction annealing treatment is 100 SCCM to 2000 SCCM.

7. The method according to any one of claims 1 to 6, wherein
the reduction annealing treatment is carried out in a tube furnace, and optionally, a temperature rise rate of the tube furnace is 2°C/min to 10°C/min, and is optionally 5°C/min to 10°C/min; and/or,
an average cooling rate of the third cooling treatment is smaller than or equal to 2°C/min, and optionally, the third cooling treatment process is a furnace cooling process; and/or,
the temperature reaches 50°C or below in the third cooling treatment.

8. The method according to any one of claims 1 to 7, wherein the alloy foil material is a copper alloy foil material, the copper alloy foil material comprises a Cu element and a non-Cu metallic element, a standard electrode potential of the non-Cu metallic element is smaller than a standard electrode potential of the Cu element, and optionally, the non-Cu metallic element comprises one or more of Mn, Zn, Ni, Al, and Fe.

9. The method according to claim 8, wherein an atomic content of the non-Cu metallic element in the copper alloy foil material is 60at.% or more, and is optionally 65at.% to 80at.%.

10. The method according to any one of claims 1 to 9, wherein
the first component phase comprises a y phase; and/or,
the second component phase comprises an α phase.

11. The method according to any one of claims 1 to 10, wherein
a temperature of the recrystallization annealing treatment is 720°C to 850°C; and/or,
a heat insulation time at the temperature of the recrystallization annealing treatment is 10 min to 60 min; and/or,
a temperature of the phase separation thermal treatment is 620°C to 700°C; and/or,
a heat insulation time at the temperature of the phase separation thermal treatment is 60 min to 360 min; and/or,
a temperature of the reduction annealing treatment is 700°C to 900°C, and is optionally 720°C to 900°C; and/or,
a heat insulation time at the temperature of the reduction annealing treatment is 30 min to 120 min.

12. The method according to any one of claims 1 to 11, wherein a process of carrying out the dealloying treatment on the alloy foil material having the first component phase and the second component phase comprises a free corrosion dealloying process and an electrochemical corrosion dealloying process.

13. A porous metal structure prepared by the method according to any one of claims 1 to 12, wherein optionally, the porous metal structure is a porous copper structure.
